# EUROPEAN PATENT APPLICATION

(11) **EP 4 618 333 A1**
(43) Date of publication of application: **17.09.2025**
(21) Application number: 23889138.6
(22) Date of filing: 08.11.2023
(51) Int. Cl.: H02B 13/075, H01H 33/04

(54) **EARTH SWITCHING DEVICE**

(30) Priority: 11.11.2022 KR 20220150214
(71) Applicant: Hyosung Heavy Industries Corporation, Seoul 04144 (KR)
(72) Inventor: LEE, Kwang Joong, Changwon-si, Gyeongsangnam-do 51529 (KR); LEE, Kyoung Kyu, Changwon-si, Gyeongsangnam-do 51529 (KR); HAN, Kyeng Min, Changwon-si, Gyeongsangnam-do 51529 (KR)
(74) Representative: Viering, Jentschura & Partner mbB Patent- und Rechtsanwälte
(86) International application number: PCT/KR2023/017848
(87) International publication number: WO 2024/101880

(57) **Abstract**

The present disclosure relates to an earth switching device having an arc inducing part provided inside a fixed part, so as to induce an arc generated at a moving contact toward the arc inducing part when the moving contact and the fixed contact become close to or away from each other, thereby preventing damage to the fixed contact caused by the arc.

## Description

### Technical Field

The present disclosure relates to an earth switching device, and more particularly, to an earth switching device in which an arc inducing part is provided in a fixed part for inducing an arc generated at a moving contact toward the arc inducing part when the moving contact and a fixed contact are approached or separated from each other, thereby preventing damage to the fixed contact.

### Background Art

In general, a gas insulated switchgear (GIS) is installed on an electric line for indoor, outdoor power plant, and substation to artificially open and close a load current under normal use. In addition, when an abnormal current such as an accident or a short circuit occurs, the current is safely blocked to protect the power system and the power device.

The gas insulated switchgear consist of opening/ closing facilities such as a circuit breaker (CB), a disconnector (DS), a current transformer (CT), an earth switch (ES), and a bus in a metal tank filled with an inert gas.

The earth switching device is divided into two types. One is an apparatus earth switch installed between a circuit breaker and a disconnector, and on a bus to perform an earthing function for the circuit during maintenance of the circuit breaker, disconnector, and bus, thereby ensuring the safety of workers. The other is a track earth switch installed on a track side of an ultra-high voltage transmission line and performs an input function for a fault current in addition to the earthing function such as the apparatus earth switch.

The earth switching device is provided inside the gas insulated switchgear and serves to prevent a safety accident by earthing a main circuit for safety during abnormal voltage generation, accident, or other repair inspections.

The earth switching device is configured to include a moving part that moves back and forth through the operation of a manipulator, a moving contact that contacts the moving part in an open state, a fixed contact that contacts or leaves based on the reciprocating motion of the moving part, and a connection bar that conducts electricity to a ground side in an input(close) state.

In the earth switch. when the manipulator operates according to an input signal in the open state, the moving part connected to the manipulator slides to be put into the fixed contact.

The direction of the current is conducted to the ground side by sequentially passing through the fixed contact, the moving part, the moving contact, and the connection bar.

Conversely, in the blocking operation, when the manipulator operates according to the open signal in the input state, the moving part slides in the opposite direction to be separated from the fixed contact and to block the flow of the current.

When the moving contact and the fixed contact of the earth switching device become closer to or away from each other, an arc may be generated.

That is, the arc mainly forms at the contact point between the moving contact of the moving part and the fixed contact of the fixed part at the beginning of arc occurrence. However, as the arc persists, the heat from the arc spreads to the contact points (both the moving and fixed contacts) that transmit current to the main circuit, causing the contacts to erode.

In order to solve these problems, an earth switch having an arc inducing part (free arc contact point) inside a stator is disclosed in Korean Utility Model Registration No. 20-0411499.

In the conventional earth switch, a free arc contact point corresponding to a moving contact of a moving part is formed in a vertical direction at a central portion of a finger forming a fixed part, and a coupling groove into which the free arc contact point is inserted and coupled to a lower side of the moving contact is formed to a predetermined depth, and an incision groove is formed in an upper portion of the free arc contact point to be elastically inserted into the coupling groove.

However, in the case of an earth switch including a conventional free arc contact point, since a free arc contact point is disposed on the same line as a fixed contact, a free arc irregularly generated may be generated at fixed contact as well as the free arc contact point, and thus, the fixed contact may be damaged.

In addition, since the conventional earth switching device has a structure in which the free arc contact point is inserted into a communication hole of the mover, the freedom of design of the free arc contact is limited.

In addition, as the free arc contact point is formed to be smaller than the moving contact, the free arc inducing performance is degraded.

### DETAILED DESCRIPTION OF THE DISCLOSURE

### Technical Problem

Therefore, the purpose of the present disclosure is to solve the problems of the prior art as described above and provide an earth switching device in which an arc inducing part is provided in a fixed part to induce an arc generated at a moving contact toward the arc inducing part when the moving contact and a fixed contact become close to or away from each other, thereby preventing damage to the fixed contact.

### Technical Solution

According to the features of the present disclosure for achieving the above purpose, an earth switching device comprises: a housing; a moving part provided inside the housing to be reciprocated by a manipulator and having a moving contact at an end thereof; a fixed part disposed to be spaced apart from the moving part by a predetermined distance, and having a fixed contact selectively grounded or short-circuited with the moving contact according to the reciprocating motion of the moving part ; and an arc inducing part provided to be able to move up and down inside the fixed contact, and inducing an arc generated at the moving contact when the moving contact approaches or moves away from the fixed contact.

The arc inducing part comprises: an arc inducing body provided inside the fixed part and having an elastic member mounting groove formed on the upper surface thereof and a lifting bar guide groove formed on the lower surface thereof; a lifting bar provided inside the arc inducing body and disposed to be vertically movable along the lifting guide groove; an arc inducing head fixedly disposed at an end of the lifting bar and made of a conductive material to induce an arc when the moving contact is adjacent; and an elastic member made of an elastic body, provided inside the elastic member mounting groove, and one end is in close contact with one side of the arc inducing head to elastically support the arc inducing head.

The arc inducing head may be disposed to protrude further upward than the fixed contact.

The moving part may further include a fluid receiving part formed as an empty space and be filled with a fluid therein.

One side of the fluid receiving part includes a fluid injecting hole formed vertically through the moving part. One end of the fluid injecting hole communicates with the fluid receiving part, and the other end communicates with the outside to spray the fluid to the arc inducing part.

The fluid filled in the fluid receiving part may be sprayed to the arc inducing part when the fixed contact and the moving contact are away from each other.

The fluid may consist of an insulating gas and may be sprayed onto a lower portion of the moving contact to suppress the generation of an arc.

### Advantageous Effects

An earth switching device according to the present disclosure has the following effects.

In the earth switching device of the present disclosure, an arc inducing part is provided in a fixed part to induce an arc generated at a moving contact toward the arc inducing part when the moving contact and a fixed contact become close to or away from each other, thereby preventing damage to the fixed contact by the arc.

In addition, an arc inducing head of the arc inducing part is provided inside the fixed part to be movable up and down. Accordingly, even after the moving contact is short-circuited with the fixed contact, the contact between the moving contact and the arc inducing head is maintained to minimize the arc generated toward the fixed contact.

In addition, after the moving contact and the arc inducing part are short-circuited, a fluid consisting of an insulating gas is sprayed toward the arc inducing part to suppress the generation of the arc, thereby preventing damage to the moving contact by the arc.

### BRIEF DESCRIPTION OF THE DRAWINGS

FIG. 1 is a front view and a cross-sectional view illustrating a configuration of an earth switching device according to a preferred embodiment of the present disclosure.
FIG. 2 is a cross-sectional view illustrating a configuration of a moving part and a fixed part constituting the embodiment of the present disclosure.
FIG. 3 is a cross-sectional view illustrating a state in which a moving contact and a fixed contact constituting the embodiment of the present disclosure are grounded.
FIG. 4 is a cross-sectional view illustrating a state in which the moving contact and the fixed contact constituting the embodiment of the present disclosure are short-circuited.
FIG. 5 is a cross-sectional view illustrating a fluid state in which the moving contact constituting the embodiment of the present disclosure is short-circuited at the fixed contact.

### Best Mode for Disclosure

Hereinafter, some embodiments of the present disclosure will be described in detail with reference to the accompanying drawings. In addition to reference numerals in the elements of each drawing, it should be noted that the same reference numerals are used for the same elements although they have the same reference numerals. Further, in the following description of the embodiments of the present invention, a detailed description of known functions and configurations incorporated herein will be omitted when it is determined that the detailed description thereof interferes with the understanding of the embodiments of the present disclosure.

In addition, terms, such as first, second, A, B, (a), (b), and the like may be used herein when describing components. These terms are only used to distinguish the components from other components, and the nature or order or order of the corresponding components is not limited by the terms. It should be understood that when one component is referred to as being "connected", "coupled" or "joined" to another component, the former may be directly connected or coupled to the other component, but another component may be "connected", "coupled", or "joined" between the first and second components.

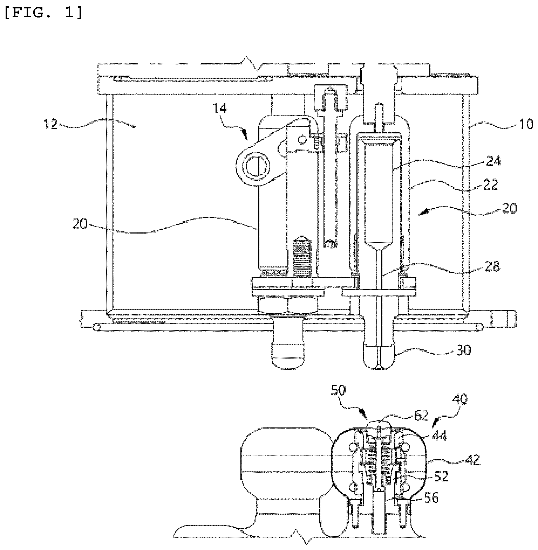

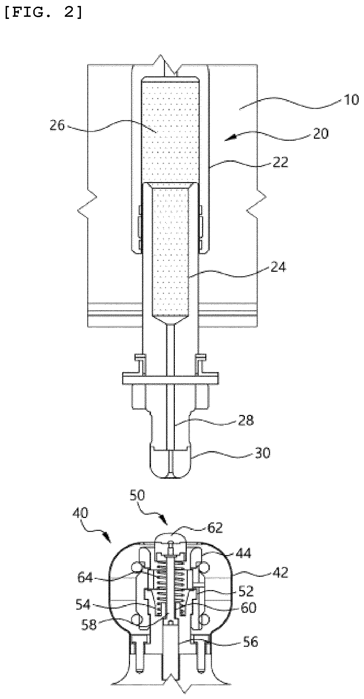

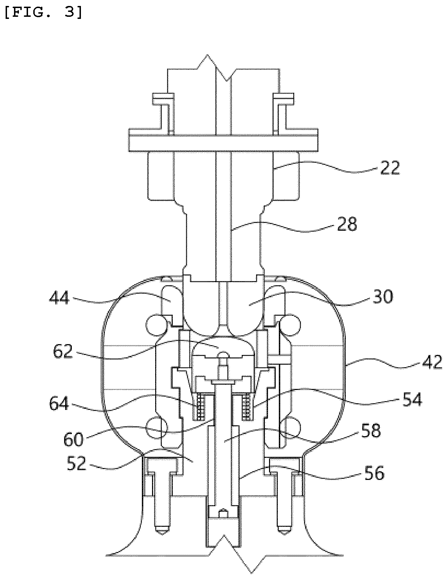

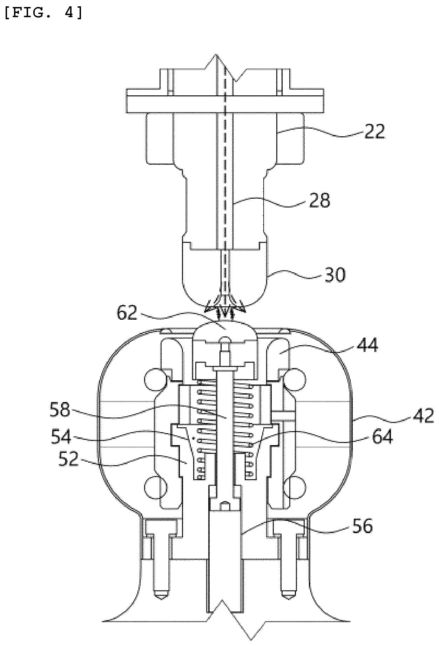

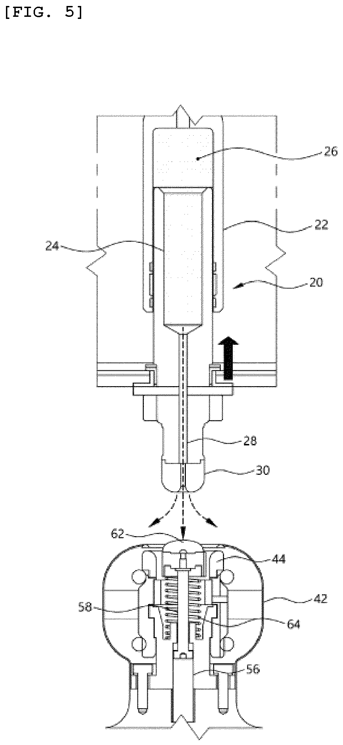

FIG. 1 is a front view and a cross-sectional view illustrating a configuration of an earth switching device according to a preferred embodiment, FIG. 2 is a cross-sectional view illustrating a configuration of a moving part and a fixed part constituting the embodiment of the present disclosure, FIG. 3 is a cross-sectional view illustrating a state in which a moving contact and a fixed contact are grounded, FIG. 4 is a cross-sectional view illustrating a state in which the moving contact and the fixed contact are short-circuited, and FIG. 5 is a cross-sectional view illustrating a fluid state in which the moving contact is short-circuited at the fixed contact.

As shown in these figures, the earth switching device comprises: a housing 10; a moving part 20 provided inside the housing 10 to be reciprocated by a manipulator and having a moving contact 30 at an end thereof; a fixed part 40 disposed to be spaced apart from the moving part 20 by a predetermined distance, and having a fixed contact 44 selectively grounded or short-circuited with the moving contact 30 according to the reciprocating motion of the moving part 20 ; and an arc inducing part 50 provided to be able to move up and down inside the fixed contact 44, and inducing an arc generated at the moving contact 30 when the moving contact 30 approaches or moves away from the fixed contact 44.

The housing 10 is formed in a chamber shape to form an outer appearance, and an inner space 12 is formed in the housing 10. A manipulator 14 and a moving part 20 are disposed in the inner space 12. The manipulator 14 is an operator of a general earth switching device, and thus a detailed description thereof will be omitted. The manipulator 14 is fixedly disposed at one side of the moving part 20 to allow the moving part 20 to reciprocate upward and downward.

As shown in FIG. 2, the moving part 20 includes a moving body part 22, a fluid receiving part 24, and a moving contact 30.

The moving body part 22 is formed in a cylindrical shape and is formed long in a vertical direction. The moving body part 22 is disposed inside the housing 10 and moves up and down according to the operation of the manipulator 14.

In addition, according to the vertical movement of the moving body part 22, grounding and short-circuiting operations between a moving contact 30 and a fixed contact 44, which will be described later, may be performed.

A fluid receiving part 24 is formed in the moving body part 22. The fluid receiving part 24 is formed as an empty space having a cylindrical shape inside the moving body part 22. A fluid 26, which will be described later, is filled in the fluid receiving part24.

The fluid 26 is a general insulating gas, and thus a detailed description thereof will be omitted. The fluid 26 is sprayed onto the lower portion of the moving part 20 through a piston injection method in a state in which the fluid 26 is filled in the fluid receiving part 24. The fluid 26 is formed of an insulating gas and is sprayed in a lower direction of the moving part 20 to suppress generation of an arc.

A fluid injection hole 28 is formed at a lower portion of the fluid receiving part 24. The fluid injection hole 28 is vertically formed through the center of the moving body part 22. One end of the fluid injection hole 28 communicates with the fluid receiving part 24, and the other end of the fluid injection hole 28 communicates with the outside of the moving part 20.

The fluid injection hole 28 communicates with the fluid receiving part 24, and serves as a path for guiding the fluid 26 to be sprayed in the lower direction of the moving part 20 during the injection operation of the fluid 26.

A moving contact 30 is provided on a lower surface of the moving body part 22. The moving contact 30 has a cylindrical shape and is fixedly provided on a lower surface of the moving body part 22. A detailed description of the moving contact 30 will be omitted. The moving contact 30 is selectively brought into contact with a fixed contact 44, which will be described later, according to the vertical movement of the moving body part 22, and serves to conduct electricity in a ground operation.

A fixed part 40 is provided at a lower portion of the moving part 20. As shown in FIG. 3, the fixed part 40 includes a fixed shield part 42, a fixed contact 44, and an arc inducing part 50.

The fixed shield part 42 is formed in a cylindrical shape having an approximately hollow interior, and a plurality of components are installed inside the fixed shield part 42. A plurality of components are installed in the fixed shield part 42 to be protected.

The fixed contact 44 is provided in the fixed shield part 42. The fixed contact 44 is a general fixed contact, and thus a detailed description thereof will be omitted. The fixed contact 44 is made of a conductive material and is formed in a circular ring shape. The fixed contact is disposed at an inner upper end of the fixed shield part 42, and the moving contact 30 is received therein to be grounded and conducted.

An arc inducing part 50 is provided inside the fixed contact 44. The arc inducing part 50 includes an arc inducing body 52, a lifting bar 58, an arc inducing head 62, an elastic member 64, and the like.

The arc inducing body 52 has a cylindrical shape and is provided inside the fixed shield part 42. The arc inducing body 52 is provided inside the fixed shield part 42 to guide vertical movement of a lifting bar 58 to be described later and to support an elastic member 64 to be described later.

An elastic member mounting groove 54 is formed on an upper surface of the arc inducing body 52. The elastic member mounting groove 54 is recessed by a predetermined depth to receive a portion of the elastic member 64, which will be described later.

A lifting bar guide groove 56 is formed on a lower surface of the arc inducing body 52. The lifting bar guide groove 56 is formed in a cylindrical shape at the center of the bottom surface of the arc inducing body 52 and is recessed by a predetermined depth. A portion of a lifting bar 58, which will be described later, is disposed in the lifting bar guide groove 56, so that the vertical movement of the lifting bar 58 is guided.

A lifting bar 58 is provided in the lifting bar guide groove 56. The lifting bar 58 is formed in a bar shape, and is formed long in a vertical direction. A portion of the lifting bar 58 is disposed in the lifting bar guide groove 56. In addition, the rest of the lifting bar 58 protrudes upward from the arc inducing body 52 through a lifting hole 60 vertically penetrating through the center of the upper surface of the arc inducing body 52.

The lifting bar 58 is disposed on the arc inducing body 52 to be movable up and down, and serves to move the arc inducing head 62, which will be described later, up and down.

At an upper end of the lifting bar 58, an arc inducing head 62 is fixedly disposed. The arc inducing head 62 is formed in a cylindrical shape and is formed of a conductive material. The arc inducing head 62 is fixedly disposed at an upper end of the lifting bar 58. The arc inducing head 62 is disposed to be vertically movable in the fixed contact 44 according to the vertical movement of the lifting bar 58. The arc inducing head 62 is disposed higher than the fixed contact 44. The arc inducing head 62 is disposed adjacent to the moving contact 30 before the fixed contact 44 when the moving contact 30 is adjacent to the fixed contact 44 for a ground operation. Accordingly, the arc inducing head 62 serves to induce an arc that may be generated at the moving contact 30 (See FIG. 4).

An elastic member 64 is disposed in the elastic member mounting groove 54. The elastic member 64 is a general spring, and a detailed description thereof will be omitted. One end of the elastic member 64 is in close contact with the bottom surface of the elastic member mounting groove 54, and the other end of the elastic member 64 is in close contact with the lower surface of the arc inducing head 62. The elastic member 64 is disposed at a lower portion of the arc inducing head 62 to elastically support the arc inducing head 62 in an upward direction.

That is, as the arc inducing head 62 is elastically supported by the elastic member 64, the moving contact 30 and the arc inducing head 62 may be kept in close contact with each other during the grounding operation, and the arc inducing head 62 may be moved downward. Accordingly, the fixed contact 44 arranged further below the arc inducing head 62 and the moving contact 30 may be grounded.

Hereinafter, the operation of the earth switching device according to the present disclosure will be described with reference to FIGS. 1 to 5.

First, the earth switching device is operated in a ground state and a short state. The ground state of the earth switching device is operated by the manipulator 14 according to a ground signal. In addition, according to the operation of the manipulator 14, the moving part 20 disposed to be able to reciprocate up and down with respect to the manipulator 14 linearly moves downward.

The moving part 20 gradually moves downward as shown in FIG. 4, and is adjacent to the arc inducing head 62 before the moving part 20 is grounded to the fixed contact 44. Accordingly, an arc generated from the moving contact 30 is induced to the arc inducing head 62.

When the moving contact 30 and the arc inducing head 62 are maintained in close contact with each other, and the moving contact 30 continues to move downward until it is finally grounded with the fixed contact 44, thereby completing the ground operation, as shown FIG. 3.

On the contrary, the short-circuit state of the earth switching device is operated by the manipulator 14 according to a short-circuit signal. According to the operation of the manipulator 14, the moving part 20 disposed to be able to reciprocate up and down with respect to the manipulator 14 linearly moves upward.

The moving part 20 gradually moves upward as shown in FIG. 5, and is short-circuited with the fixed contact 44. In this case, even if the moving contact 30 and the fixed contact 44 are short-circuited, the moving contact 30 and the arc inducing head 62 are maintained in close contact with each other.

That is, since the arc inducing head 62 is disposed higher than the fixed contact 44, the state in which the arc inducing head 62 is in close contact with the moving contact 30 may be maintained even after the fixed contact 44 and the moving contact 30 are short-circuited.

When the moving contact 30 is moved up to a predetermined distance or more, the moving contact 30 and the arc inducing head 62 are short-circuited. At the same time, the fluid 26 filled in the fluid receiving part 24 is sprayed in the downward direction to suppress the arc generated in the short circuit operation.

Therefore, in the earth switching device of the present disclosure, the arc inducing part 50 is provided in the fixed part 40 to induce an arc generated at the moving contact 30 toward the arc inducing part 50 when the moving contact 30 and the fixed contact 44 become close to or away from each other, thereby preventing damage to the fixed contact 44 by the arc.

In addition, since the arc inducing head 62 of the arc inducing part 50 is provided inside the fixed part to be movable up and down, the contact between the moving contact 30 and the arc inducing head 62 is maintained even after the moving contact 30 is short-circuited with the fixed contact 44, thereby minimizing the arc generated toward the fixed contact 44.

In addition, after the moving contact 30 and the arc inducing part 50 are short-circuited, the fluid 26 formed of the insulating gas is sprayed toward the arc inducing part 50 to suppress the generation of the arc, thereby minimizing damage to the moving contact 30 by the arc.

The scope of the present disclosure is not limited to the above-described embodiments, and many other modifications based on the present invention will be made to those skilled in the art within the technical scope as described above.

## Claims

1. An earth switching device, comprising:
a housing;
a moving part which is provided inside the housing to be reciprocated by a manipulator and having a moving contact at an end thereof;
a fixed part disposed to be spaced apart from the moving part by a predetermined distance, and having a fixed contact selectively grounded or short-circuited with the moving contact according to the reciprocating motion of the moving part; and,
an arc inducing part provided to be able to move up and down inside the fixed contact, and inducing an arc generated at the moving contact when the moving contact approaches or moves away from the fixed contact.

2. The earth switching device of claim 1, wherein the arc inducing part is disposed to protrude further upward than the fixed contact.

3. The earth switching device of claim 1, wherein the arc inducing part is disposed to be elastically supported in the direction of the moving contact.

4. The earth switching device of claim 1, wherein the arc inducing part comprises:
an arc inducing body provided inside the fixed part and having an elastic member mounting groove formed on an upper surface thereof and a lifting bar guide groove formed on a lower surface thereof;
a lifting bar formed in a shape of a bar and provided inside the arc inducing body to be vertically movable along the lifting bar guide groove;
an arc inducing head fixedly provided at an end of the lifting bar and made of a conductive material to induce an arc when the moving contact is adjacent to the arc inducing head; and
an elastic member made of an elastic body, provided inside the elastic member mounting groove, and one end thereof is in close contact with one side of the arc inducing head to elastically support the arc inducing head.

5. The earth switching device of claim 1, wherein the moving part further includes a fluid receiving part formed as an empty space and is filled with a fluid therein.

6. The earth switching device of claim 5, wherein one side of the fluid receiving part includes a fluid injecting hole formed vertically through the moving part,
wherein one end of the fluid injecting hole communicates with the fluid receiving part, and the other end thereof communicates with the outside to spray the fluid onto the arc inducing part.

7. The earth switching device of claim 5, wherein the fluid filled in the fluid receiving part is sprayed to the arc inducing part when the fixed contact and the moving contact are away from each other

8. The earth switching device of claim 7, wherein the fluid consists of an insulating gas and is sprayed onto a lower portion of the moving contact to suppress the generation of an arc.
